# FASCICULE DE BREVET EUROPEEN

(11) **EP 3 655 280 B1**
(45) Date de publication et mention de la délivrance du brevet: **25.05.2022**
(21) Numéro de dépôt: 18746123.1
(22) Date de dépôt: 18.07.2018
(51) Int. Cl.: B60K 15/035, B60K 15/03, F01N 3/20

(54) **DISPOSITIF DE VENTILATION ÉQUIPÉ D'UNE MEMBRANE POUR UN RÉSERVOIR DE LIQUIDE DE VÉHICULE**
ENTLÜFTUNGSVORRICHTUNG MIT EINER MEMBRAN FÜR EINEN FLÜSSIGKEITSTANK EINES FAHRZEUGS
VENTING DEVICE WITH A MEMBRANE FOR A LIQUID TANK OF A VEHICLE

(30) Priorité: 18.07.2017 FR 1756818
(43) Date de publication de la demande: 27.05.2020
(73) Titulaire: Plastic Omnium Advanced Innovation And Research, 1130 Bruxelles (BE)
(72) Inventeur: LEROY, Matthieu, 1130 Bruxelles (BE); DERANGERE, Nicolas, 60280 Margny-Lès-Compiègne (FR); FATH, Cécile, 1130 Bruxelles (BE)
(74) Mandataire: LLR
(86) Numéro de dépôt international: PCT/EP2018/069547
(87) Numéro de publication internationale: WO 2019/020468

(56) Documents cités:
- EP-A1- 3 184 772
- EP-A2- 2 106 950
- US-A1- 2010 223 917
- US-A1- 2010 236 640

## Description

L'invention concerne les réservoirs de liquide de véhicule et leurs dispositifs de ventilation. Elle concerne les réservoirs d'eau, les réservoirs de carburant et les réservoirs d'un précurseur de l'ammoniac tel que l'urée.

Quel que soit le liquide contenu, le réservoir doit comprendre un dispositif de ventilation permettant l'évacuation de vapeur ou d'air lorsque le réservoir est en surpression en raison par exemple d'une augmentation de la température du réservoir, d'une montée en altitude ou encore durant une phase de remplissage du réservoir au cours de laquelle le gaz présent dans le réservoir doit rapidement laisser la place au liquide qui y est introduit. Un tel dispositif doit également permettre l'introduction de gaz dans le réservoir par exemple lorsque le réservoir se met en dépression sous l'effet d'une réduction de sa température, d'une baisse d'altitude ou de la consommation du liquide du réservoir par le véhicule.

Un tel dispositif de ventilation devrait dans la mesure du possible présenter les avantages suivants. Il devrait être compact. Il devrait protéger le réservoir à l'égard de la contamination par des éléments étrangers au réservoir. Il peut s'agir par exemple de débris, de poussières ou encore d'insectes. Il ne devrait pas être sensible à l'humidité. Il devrait être résistant au gel et au dégel du liquide contenu dans le réservoir. Enfin il devrait protéger le réservoir en cas de passage de gué (*ford crossing*). Il s'agit de la situation dans laquelle le véhicule traverse un cours d'eau de faible profondeur de telle sorte que le niveau de l'eau atteint ou dépasse celui du dispositif de ventilation du réservoir. Dans une telle situation, l'eau ne devrait pas remplir le réservoir à travers le dispositif de ventilation.

Des dispositifs de ventilation sont connus des documents US 2010/223917 A1, EP 2 106 950 A2 et EP 3 184 772 A1.

De plus, on connaîtp du document WO2010/106421 à la figure 1 un dispositif de ventilation muni d'une membrane imperméable au liquide du réservoir mais perméable aux vapeurs émanant de ce liquide et à l'air. Le capuchon du réservoir de ce mode de réalisation assure la ventilation du réservoir jusqu'à la membrane, mais de l'eau peut s'introduire jusqu'à cette dernière en cas de passage de gué. Or une fois sur la membrane, l'eau y stagne, obstrue la membrane et limite la ventilation, voire l'empêche totalement, ce qui est nuisible au fonctionnement du réservoir.

Un but de l'invention est de pallier cet inconvénient.

A cet effet, on prévoit selon l'invention un dispositif de ventilation pour un réservoir de liquide de véhicule, qui comprend :
- une membrane imperméable à un liquide prédéterminé et perméable à une vapeur susceptible d'être produite par ce liquide, et
- au moins un conduit apte à évacuer hors du dispositif du liquide se trouvant sur la membrane, le ou chaque conduit ayant une extrémité contiguë à la membrane, le reste du ou de chaque conduit s'étendant à une altitude inférieure à cette extrémité lorsqu'un axe principal du dispositif est vertical.

Ainsi, lorsque de l'eau est parvenue à atteindre la membrane, notamment en cas de passage de gué, le ou chaque conduit en assure immédiatement l'évacuation par gravité. De la sorte, la membrane reste libre de toute eau stagnante et peut assurer normalement sa fonction de ventilation. Par ailleurs, ce dispositif autorise l'équilibrage des surpressions et des dépressions dans le réservoir. Il est compact. Il protège le réservoir à l'égard de la contamination par des éléments étrangers au réservoir. Il peut s'agir par exemple de débris, de poussières ou encore d'insectes. Il n'est pas sensible à l'humidité. Il est résistant au gel et au dégel du liquide contenu dans le réservoir.

Une membrane est un élément dont l'épaisseur est négligeable par rapport à sa plus grande dimension. Dans le cas d'une membrane circulaire, la plus grande dimension de la membrane est son diamètre. Cette caractéristique est avantageuse notamment en ce qu'elle permet de réduire la perte de charge du dispositif. On peut prévoir que la membrane a une épaisseur comprise entre 250 et 350 µm. On peut également prévoir que la plus grande dimension de la membrane est comprise entre 10 et 100 mm, par exemple entre 15 et 50 mm, de préférence entre 20 et 30 mm. La membrane peut être réalisée en toute matière dont les propriétés lui permettent d'être imperméable à un liquide prédéterminé et perméable à une vapeur susceptible d'être produite par ce liquide. De préférence, la membrane est en polytétrafluoroéthylène (PTFE). De manière avantageuse, la membrane est oléophobe, hydrophobe et perméable à l'air. Ces propriétés sont avantageuses en ce qu'elles participent au rôle de barrière de la membrane, par exemple contre l'eau et les salissures. Par exemple, la membrane peut comprendre un revêtement oléophobe. On peut prévoir que la membrane est faite d'une matière qui peut être soudée à des composées en matière plastique, une telle matière pouvant être par exemple du PTFE.

De préférence, le dispositif est apte à permettre une communication de gaz entre l'extérieur du dispositif et un côté supérieur de la membrane tout en limitant l'intrusion depuis l'extérieur du dispositif vers ce côté de la membrane de tout élément étranger au dispositif présentant une plus petite dimension totale supérieure à un seuil prédéterminé, notamment 2 mm.

En effet, notamment pour les réservoirs d'eau, il est obligatoire de doter le dispositif de ventilation d'une protection contre l'intrusion d'éléments étrangers. Ces réservoirs sont en effet très sensibles au développement bactérien. La limitation dimensionnelle précitée réduit encore davantage le risque d"intrusion de débris, d'insectes et d'araignées jusqu'à la membrane. On réduit donc les risques que la membrane soit obstruée par des éléments étrangers ainsi que les risques de développement bactérien dans le cas d'un réservoir d'eau.

Dans un mode de réalisation, le dispositif comprend un corps principal et un capuchon apte à être fixé au corps en permettant une communication de gaz entre l'extérieur du dispositif et un côté supérieur de la membrane tout en limitant l'intrusion depuis l'extérieur du dispositif vers ce côté de la membrane de tout élément étranger au dispositif présentant une plus petite dimension totale supérieure à un seuil prédéterminé, notamment 2 mm.

Il s'agit d'une façon avantageuse d'empêcher l'intrusion d'éléments étrangers comme expliqué plus haut. On peut par exemple prévoir que l'assemblage du capuchon et du corps principal ménage un espace radial d'une taille prédéterminée permettant de limiter l'intrusion d'éléments étrangers ayant une plus petite dimension totale supérieure à cette taille prédéterminée. Autrement dit, il existe un jeu radial entre le capuchon et le corps principal, la taille de ce jeu déterminant un seuil à partir duquel des éléments étrangers ne peuvent pas s'introduire dans le dispositif et, plus particulièrement, ne peuvent pas atteindre la membrane. On peut prévoir que ce jeu radial ait la plus petite taille possible, c'est-à-dire la plus petite taille compatible avec la faisabilité de la pièce et présentant une perte de charge inférieure à une perte de charge de la membrane elle-même.

Par ailleurs, l'assemblage du capuchon sur le corps principal forme un parcours sinueux depuis l'extérieur du dispositif jusqu'à la membrane. Ce parcours forme ainsi un labyrinthe qui réduit le risque qu'un élément étranger arrive jusqu'à la membrane.

On peut prévoir que le capuchon présente une nervure circulaire complémentaire au moins en partie d'un sillon présent sur le corps principal de manière à guider le capuchon lors de l'assemblage de celui-ci sur le corps principal du dispositif de ventilation.

On peut prévoir que le dispositif comprend deux zones d'appuis permettant de limiter le déplacement de la membrane en cas de dépression ou de surpression. Ces zones d'appuis ont pour but de limiter la contrainte dans la membrane lors de variations de pression dans le réservoir.

Dans un mode de réalisation, le dispositif comprend un corps principal et un capuchon apte à être fixé au corps,
dans lequel la membrane est fixée par un bord circonférentiel, de façon étanche à l'eau, au corps au niveau d'une ouverture de ce dernier, cette ouverture étant formée par une collerette interne,
dans lequel le capuchon comprend une paroi latérale munie d'une face interne telle que la face interne de la paroi est en regard d'une face externe de la collerette interne en étant séparée de cette dernière par une distance inférieure à un seuil prédéterminé, notamment 2 mm.

Une telle disposition permet une communication de gaz entre l'extérieur du dispositif et un côté supérieur de la membrane tout en limitant l'intrusion depuis l'extérieur du dispositif vers ce côté de la membrane de tout élément étranger au dispositif présentant une plus petite dimension totale supérieure à un seuil prédéterminé, notamment 2 mm. On peut prévoir que le bord circonférentiel de la membrane et/ou l'ouverture du corps sont de forme circulaire. On peut bien entendu prévoir que ce bord et/ou cette ouverture ont une autre forme, par exemple ovale, oblongue ou polygonale. On peut prévoir que la collerette interne et/ou la paroi latérale sont de forme cylindrique. On peut bien entendu prévoir que cette collerette interne et/ou cette paroi latérale ont une autre forme, par exemple tronconique.

Par exemple, le capuchon est soudé au corps.

Avantageusement, le réservoir comprend une paroi ajourée s'étendant à distance de la membrane, en regard d'un côté inférieur de la membrane.

Cette paroi ajourée assure une communication de gaz entre l'intérieur du réservoir et la membrane tout en protégeant cette dernière à l'égard des masses qui pourraient venir heurter la membrane et l'endommager. Il peut s'agir de masses de liquide comme de blocs de glace ou de solution de précurseur d'ammoniac solidifiée sous l'effet du gel. On rappelle à ce sujet que l'eau gèle à 0 °C et qu'une solution eutectique d'urée couramment utilisée pour générer de l'ammoniac gèle à environ -13 °C, qui sont des températures auxquelles un véhicule est susceptible d'être exposé. On rappelle que l'ammoniac peut être utilisé dans le circuit d'échappement du moteur thermique du véhicule pour réduire les oxydes d'azote et ainsi dépolluer les gaz d'échappement. De préférence, la distance entre la membrane et la paroi ajourée est la plus grande possible, par exemple la distance entre la membrane et la paroi ajourée est égale à la distance entre la membrane et la paroi du réservoir de liquide sur lequel le dispositif de ventilation est monté. Plus la distance entre la membrane et la paroi ajourée est élevée, moins il y a de risque qu'un bloc de glace ne vienne heurter la membrane et l'endommager.

La paroi ajourée comprend au moins une ouverture. On peut prévoir que la paroi ajourée comprend entre une et dix ouvertures, par exemple entre trois et six ouvertures. La ou les ouvertures peuvent avoir par exemple une forme circulaire. On peut prévoir que la ou les ouvertures sont dimensionnées pour être insensibles à la cristallisation du liquide contenu dans le réservoir au contact de l'air. Plus particulièrement, on peut prévoir que la ou les ouvertures sont dimensionnées pour être insensibles à la cristallisation de l'urée au contact de l'air. On évite ainsi un risque d'obstruction de la ou des ouvertures qui empêcheraient le bon fonctionnement du dispositif.

Avantageusement, le réservoir comprend un socle présentant une plus grande dimension transversale supérieure à une plus grande dimension transversale du corps.

Ainsi il est possible de prendre appui sur le socle lors de la fixation du dispositif au réservoir. La largeur du socle est notamment choisie en fonction des tolérances d'injection du réservoir, de la dimension d'un trou de ventilation dans la paroi du réservoir sur lequel le dispositif de ventilation est installé et/ou de la précision de soudure de la machine utilisée pour la fabrication du dispositif ou pour son assemblage sur le réservoir. Plus la largeur du socle est petite, plus le dispositif est compact.

Avantageusement, le corps comprend au moins deux pans inclinés externes orientés en direction du socle.

Ces deux pans peuvent servir de point d'appui pour la saisie du dispositif lors de sa fixation à un réservoir.

Avantageusement, au moins une face externe du dispositif présente un filet de vissage. Ce filet de vissage permet par exemple le verrouillage d'un outil de soudure lors de l'assemblage du dispositif sur le réservoir.

On prévoit également selon l'invention un réservoir qui comprend un dispositif selon l'invention.

On prévoit aussi selon l'invention un réservoir de liquide pour véhicule, qui comprend
- une membrane imperméable au liquide et perméable à une vapeur susceptible d'être produite par ce liquide, et
- au moins un conduit apte à évacuer hors du réservoir du liquide se trouvant sur la membrane, le ou chaque conduit ayant une extrémité contiguë à la membrane, le reste du ou de chaque conduit s'étendant à une altitude inférieure à cette extrémité lorsqu'un axe principal du réservoir est vertical.

Avantageusement, le réservoir comprend une paroi ajourée s'étendant à distance de la membrane, en regard d'un côté de la membrane dirigé vers l'intérieur du réservoir.

Le réservoir selon l'invention peut former un réservoir d'eau, un réservoir de carburant ou un réservoir d'un précurseur de l'ammoniac tel que l'urée.

On prévoit enfin selon l'invention un véhicule qui comprend un dispositif selon l'invention ou un réservoir selon l'invention.

Nous allons maintenant présenter deux modes de réalisation de l'invention donnés à titre d'exemples non limitatifs et à l'appui des figures annexées sur lesquelles :
- les figures 1 et 2 sont des vues en perspective et en élévation d'un réservoir selon un premier mode de réalisation de l'invention,
- les figures 3 à 5 sont des vues en élévation, en coupe axiale verticale et de dessus du dispositif de ventilation du réservoir des figures précédentes,
- la figure 6 est une vue en perspective du dispositif de ventilation selon un deuxième mode de réalisation, sur laquelle le capuchon et la membrane ne sont pas représentés, et
- la figure 7 est une vue en perspective du dispositif de la figure 6.

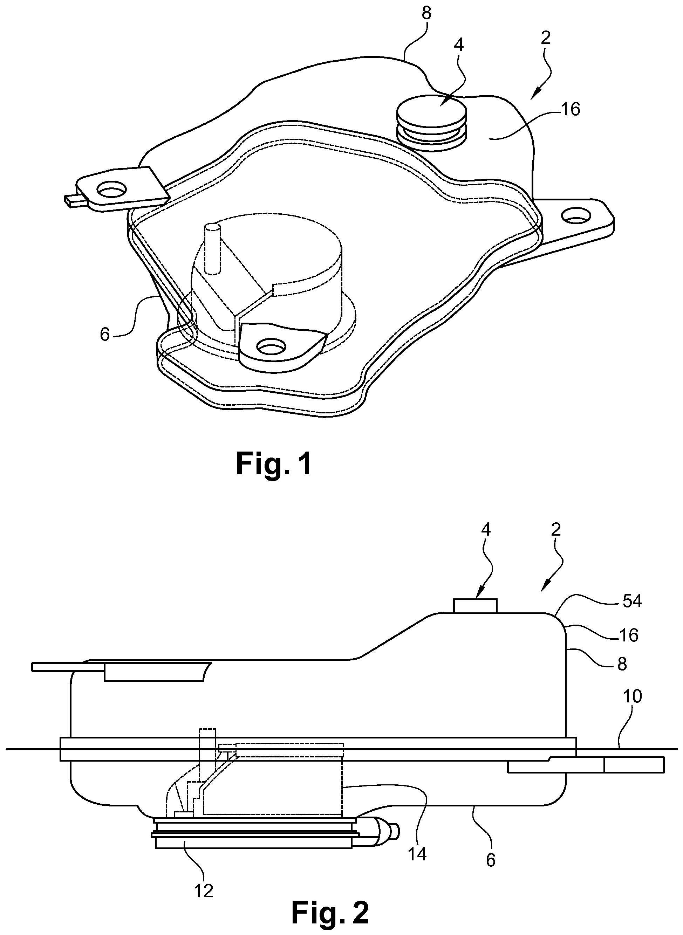

Nous allons présenter en référence aux figures 1 à 5 un réservoir 2 pour véhicule doté d'un dispositif de ventilation 4 selon un premier mode de réalisation de l'invention. Il s'agit d'un réservoir de carburant tel que du gasoil, dans le présent exemple.

Le réservoir 2 est ici formé par deux coques inférieure 6 et supérieure 8 réalisées en matière thermoplastique. Les deux coques seront soudées l'une à l'autre au niveau d'un plan de soudure 10 s'étendant dans une zone médiane de la hauteur du réservoir.

En partie inférieure, le réservoir comprend une platine 12 obturant une ouverture inférieure de la coque inférieure 6 et portant différents organes rassemblés pour former un module 14 s'étendant dans le réservoir. Ces organes comprennent notamment une pompe pour l'injection du liquide du réservoir hors de ce dernier en vue de son utilisation à bord du véhicule. Un tel module est connu en lui-même et ne sera pas davantage décrit ici.

Le dispositif de ventilation 4 est situé dans le point le plus haut du réservoir ou l'un de ses points les plus hauts. Ce point forme ici un renfoncement supérieur 16. Le dispositif est disposé sur une ouverture 18 de la coque supérieure 8, ouverture prévue dans l'une des parois principales du réservoir.

Le dispositif 4 comprend un organe de ventilation comprenant une membrane 20 imperméable à l'eau et perméable à la vapeur de gasoil, à la vapeur d'eau et à l'air. Cette membrane est ici microporeuse et par exemple réalisée en polytétrafluoréthylène ou PTFE. La membrane 20 a une épaisseur comprise entre 250 et 350 µm. La membrane 20 est par exemple réalisée sous une forme plane, telle qu'un disque. Elle s'étend horizontalement et est fixée par son bord circulaire circonférentiel de façon étanche à l'eau à un support 22 du dispositif de ventilation au niveau d'une ouverture circulaire de ce support, formée ici par une collerette cylindrique interne 24.

Le dispositif comprend en outre un capuchon 33 apte à être fixé au support 22 :
- en préservant un passage de gaz à travers la membrane 20 vers l'extérieur du dispositif le long du capuchon, et
- en limitant l'intrusion dans le dispositif de tout élément étranger au dispositif présentant une plus petite dimension totale supérieure à un seuil prédéterminé, notamment 2 mm, voire 1,5 mm. À cette fin, le capuchon comprend dans le présent exemple une paroi supérieure 36 en forme de disque et une paroi latérale cylindrique 38.

Le socle 22 comprend une collerette cylindrique externe 34 s'étendant autour de la collerette interne 24 et à distance de cette dernière par référence à un axe principal 32 du dispositif. Cet axe est orienté verticalement lors de l'utilisation du dispositif et du réservoir à bord du véhicule. La collerette externe 34 s'étend aussi plus haut que la collerette interne 24. La paroi cylindrique 38 du support est fixée à sa paroi supérieure 36 à distance du bord périphérique de cette dernière. De la sorte, la zone de bord périphérique de la paroi 36 est laissée libre et sert à la fixation du capuchon directement sur la collerette cylindrique externe 34, en l'espèce par soudage par ultrasons. Ce soudage réalise une jonction continue tout le long du bord interne sur une boucle fermée.

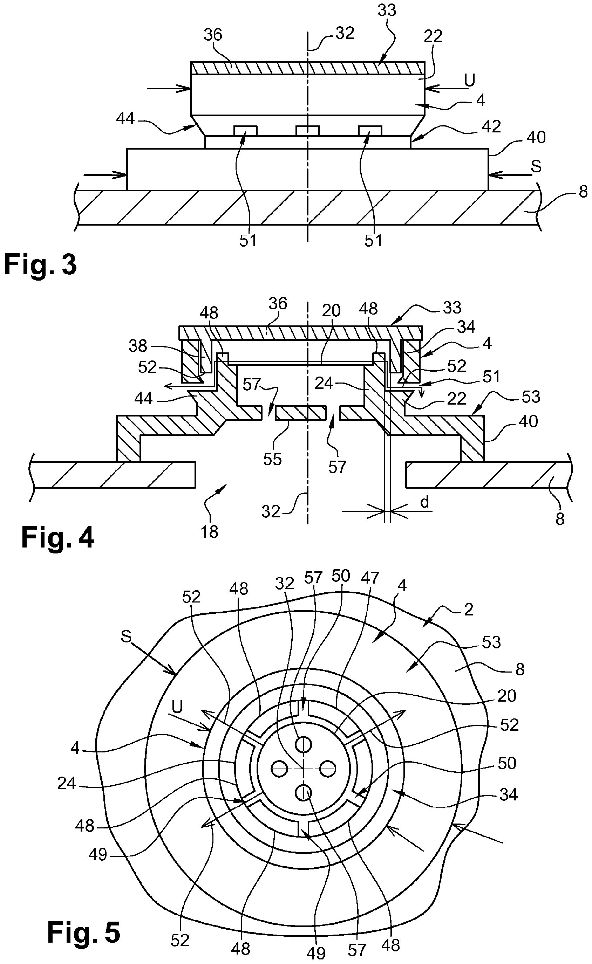

La paroi cylindrique 38 du capuchon vient donc en regard par sa face externe de la face interne de la collerette externe 34. De plus, la face interne de la paroi 38 vient en regard de la face externe de la collerette interne 24 en étant séparée par cette dernière d'une distance d inférieure à 2 mm, de préférence à 1,5 mm. Cette distance est illustrée sur la figure 4. Elle procure l'effet anti-intrusion précité.

La collerette interne 24 est surmontée dans le présent exemple par des créneaux courbes 48 disposés en configuration circulaire en vue en plan comme sur la figure 5 et ici au nombre de six. Le sommet des créneaux 48 vient en regard et à distance de la face interne de la paroi supérieure 36 du capuchon. Les créneaux 48 sont disposés à distance les uns des autres de sorte que leurs bords latéraux 49 s'étendent en regard et à distance les uns des autres. Cette distance ménage entre les créneaux 48 des espaces respectifs 50 qui mettent en communication la membrane 20 avec l'extérieur de la collerette 24. De la sorte, chacun des espaces 50 fait partie d'un conduit 52 dont l'extrémité amont est contiguë au bord circulaire circonférentiel de la membrane 20 au sommet de la collerette. Les termes « amont » et « aval » font ici référence à l'écoulement de l'eau depuis la membrane vers l'extérieur du dispositif. En direction de l'aval, chaque conduit 52 se poursuit en étant formé par l'espace 50 puis descend entre la face externe de la collerette 24 et la face interne de la paroi cylindrique 38 du capuchon. Enfin, des orifices 51 sont ménagés dans la paroi tronconique 44. Ces orifices sont en communication respective avec les espaces 50 et se trouvent à la même position angulaire que ceux-ci autour de l'axe 32. Ces orifices forment l'extrémité aval des conduits. La présence de ces multiples orifices permet de réduire le risque d'obstruction du dispositif. On observe que l'extrémité amont de chaque conduit contiguë à la membrane 20 forme le point le plus haut du conduit lorsque l'axe 32 est vertical c'est-à-dire lorsque le dispositif et le réservoir sont dans leur position normale d'utilisation. L'extrémité aval du conduit, formée par l'orifice 51, en constitue le point le plus bas. En outre, le fait que ces orifices soient répartis angulairement autour de l'axe 32 permet une bonne évacuation des liquides potentiellement présents sur la membrane et limite donc l'accumulation de ceux-ci sur la membrane, permettant ainsi de conserver la fonction de ventilation de celle-ci, par exemple lors d'un passage à gué.

Le support 22 comprend une paroi inférieure horizontale plane 55 perpendiculaire à l'axe 32, s'étendant au-dessous de la membrane 20, en regard et à distance de celle-ci. La paroi présente des orifices ou des jours 57 (voir figures 4 et 5). Ces orifices 57 permettent d'évacuer l'eau qui pourrait se trouver au-dessus de la paroi afin qu'elle retombe dans le réservoir. Ils mettent également la membrane 20 en communication de gaz avec l'intérieur du réservoir. Cette paroi assure également une protection de la membrane à l'égard des masses de liquide ou des blocs de liquide gelé qui pourrait venir endommager la membrane.

Le dispositif de ventilation comprend en outre un socle 40. Le support 22 est fixé rigidement à la paroi supérieure du socle 40. La partie du support 22 contiguë au socle 40 forme une face cylindrique 42 de diamètre inférieur à celui U de la face cylindrique externe de la collerette 34. La jonction entre ces deux faces est formée par une face tronconique 44. Ce rétrécissement du support en direction du socle offre donc des pans inclinés qui facilitent la préhension du support par un outil lors de la fixation du dispositif au réservoir.

Le support 22 et le socle 40 sont réalisés en matière thermoplastique. Le socle est fixé, par exemple par soudage, à la paroi principale du réservoir formant la coque supérieure 8 en regard de l'ouverture 18. Dans le présent exemple, le bord supérieur du socle vient en appui contre une face externe de la paroi principale. L'ouverture 18 est ainsi en communication de gaz avec la membrane 20. Enfin la membrane est en communication de gaz avec l'extérieur du réservoir le long du capuchon 36. On voit que le dispositif 4 est apte à être rapporté sur un réservoir 2 pour le ventiler. La membrane est apte en effet à mettre l'intérieur du réservoir en communication de gaz avec l'extérieur du réservoir.

Le réservoir comprend par ailleurs une tubulure de remplissage 54.

Le socle, le capuchon et le support sont par exemple réalisés en polyéthylène, d'autres matières thermoplastiques étant cependant envisageables.

Le dispositif fonctionne de la façon suivante.

Lorsque le réservoir subit une surpression en raison d'une élévation de la température ou de l'altitude, comme cette élévation se produit en général lentement, la vapeur d'eau ou la vapeur de carburant peut passer lentement à travers l'ouverture 18 du réservoir, à travers les ouvertures 57 jusqu'à atteindre la membrane 20 et traverser celle-ci. Ces gaz passent par-dessus la collerette et sous la paroi 36 du capuchon puis entre la collerette et la paroi latérale 38 puis s'échappent à travers les orifices 51 jusque dans l'atmosphère.

Lorsque le réservoir subit une dépression en raison d'une baisse de la température ou de l'altitude, le même phénomène se produit en sens inverse sauf que cette fois c'est de l'air ambiant qui pénètre sous le capuchon 36 à travers la membrane 20 jusqu'à atteindre l'intérieur du réservoir pour y rétablir une pression normale.

La membrane procure par ailleurs une protection efficace contre l'intrusion d'éléments étrangers. Une protection supplémentaire est procurée par la coopération entre le capuchon 33 et le support 22 pour les éléments ayant une plus petite dimension totale inférieure à 2 mm. En effet, les débris et surtout les insectes ou les araignées ne peuvent pas pour la plupart pénétrer par les orifices 51 et encore moins entre la collerette 24 et la paroi latérale 38 du capuchon compte tenu de la distance d. Dans ce cadre, la collerette interne 24 et le capuchon 33 forment un labyrinthe d'autant plus efficace qu'il est tortueux.

Si de l'eau arrivait sur la membrane 20 par exemple à l'occasion d'un passage de gué, cette eau est immédiatement évacuée par gravité à travers les conduits de drainage 52, en franchissant d'abord les espaces de drainage 50 et finalement les orifices de drainage 51.

Le dispositif de ventilation peut être rapportée sur le réservoir une fois celui-ci réalisé ou bien intégré au réservoir durant la fabrication, notamment par injection ou par soufflage, de ce dernier. À ce sujet, la paroi tronconique 44 offre une prise pour un outil permettant la tenue du support 22 pendant la pose et la fixation du dispositif sur un réservoir. Et la face supérieure 53 du socle, laissée dégagée par le support, permet à un outil de prendre appui pour cette fixation, qui a lieu par exemple par soudage à chaud de la matière plastique du socle sur celle du réservoir. Ce dégagement résulte de ce que la plus grande dimension transversale U qui correspond au plus grand diamètre du support 22 est inférieure au plus grand diamètre S du socle 40.

On observe que le dispositif est compact.

On présente ci-après quelques exemples de dimensionnements pour la réalisation de l'invention, à titre non limitatif étant entendu que d'autres dimensionnements peuvent être envisagés.

### Dans le cas d'un réservoir d'eau

Pour un réservoir d'eau, on peut donner à la membrane 20 un diamètre de 30 mm. Elle devra permettre de procurer une perte de charge de 50 mbar (50 hPa ou 5000 Pa) dans le réservoir avec un débit de gaz de 80 litres par heure. En effet, en fonctionnement, la pompe du réservoir va appliquer un débit de 80 litres par heure, et on ne souhaite pas que la dépression du réservoir excède les 50 mbar.

### Dans le cas d'un réservoir d'une solution d'urée

Pour un réservoir d'une solution d'urée, on peut donner à la membrane 20 un diamètre de 20 mm. Elle devra permettre de procurer une perte de charge de 45 mbar (4500 Pa) dans le réservoir avec un débit de gaz de 15 litres par heure.

### Dans le cas d'un réservoir de carburant tel que du gasoil

Pour un réservoir de carburant tel que du gasoil, on peut donner à la membrane 20 un diamètre de 30 mm. Elle devra permettre de procurer une perte de charge de 45 mbar (4500 Pa) dans le réservoir avec un débit de gaz de 30 litres par heure.

L'invention n'est pas limitée au mode de réalisation présenté.

Le capuchon peut aussi être fixé au support par clipsage.

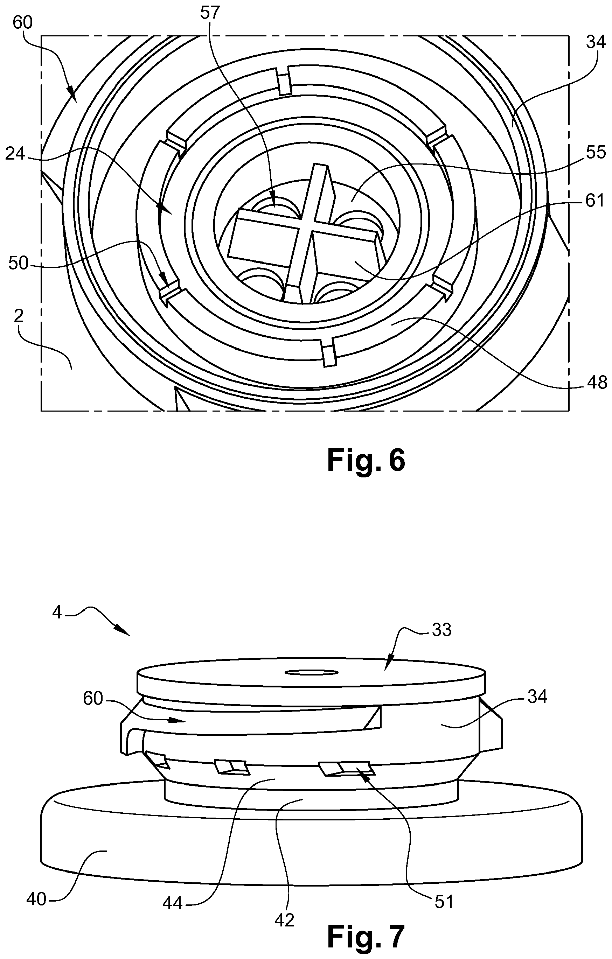

Le second mode de réalisation, représenté aux figures 6 et 7, est identique au premier mode de réalisation excepté pour les points suivants :
- un croisillon 61 s'étend à partir de la paroi ajourée 55 en direction de la membrane 20 (voir figure 6). Le croisillon 61 délimite quatre compartiments qui comprennent chacun un des orifices 57 de la paroi ajourée 55. Ce croisillon 61 permet, entre autres, de renforcer la paroi ajourée 55, et
- la collerette externe 34 présente une face interne et une face externe par référence à l'axe principal 32 du dispositif. Un filet de vissage 60 est présent sur la face externe de la collerette externe 34 (voir figures 6 et 7). Ce filet de vissage 60 permet notamment le verrouillage d'un outil de soudure lors de la procédure d'assemblage du dispositif 4 sur le réservoir 2.

## Revendications

1. Dispositif de ventilation (4) pour un réservoir (2) de liquide de véhicule, comprenant:
- une membrane (20) imperméable à un liquide prédéterminé et perméable à une vapeur susceptible d'être produite par ce liquide, et
- au moins un conduit (52) apte à évacuer hors du dispositif du liquide se trouvant sur la membrane, le ou chaque conduit ayant une extrémité contiguë à la membrane, le reste du ou de chaque conduit s'étendant à une altitude inférieure à cette extrémité lorsqu'un axe principal du dispositif est vertical.

2. Dispositif selon la revendication précédente, apte à permettre une communication de gaz entre l'extérieur du dispositif et un côté supérieur de la membrane (20) tout en limitant l'intrusion depuis l'extérieur du dispositif vers ce côté de la membrane de tout élément étranger au dispositif présentant une plus petite dimension totale supérieure à un seuil prédéterminé, notamment 2 mm.

3. Dispositif selon au moins l'une quelconque des revendications précédentes qui comprend un corps principal (22) et un capuchon (33) apte à être fixé au corps en permettant une communication de gaz entre l'extérieur du dispositif et un côté supérieur de la membrane tout en limitant l'intrusion depuis l'extérieur du dispositif vers ce côté de la membrane de tout élément étranger au dispositif présentant une plus petite dimension totale supérieure à un seuil prédéterminé, notamment 2 mm.

4. Dispositif selon l'une quelconque des revendications précédentes, comprenant un corps principal (22) et un capuchon (33) apte à être fixé au corps (22),
dans lequel la membrane (20) est fixée par un bord circonférentiel, de façon étanche à l'eau, au corps au niveau d'une ouverture de ce dernier, cette ouverture étant formée par une collerette interne (24),
dans lequel le capuchon comprend une paroi latérale (38) munie d'une face interne telle que la face interne de la paroi est en regard d'une face externe de la collerette interne en étant séparée de cette dernière par une distance inférieure à un seuil prédéterminé, notamment 2 mm.

5. Dispositif selon la revendication 3 ou 4 dans lequel le capuchon (33) est soudé au corps.

6. Dispositif selon au moins l'une quelconque des revendications précédentes qui comprend une paroi ajourée s'étendant à distance de la membrane (20), en regard d'un côté inférieur de la membrane.

7. Dispositif selon au moins l'une quelconque des revendications précédentes qui comprend un corps (22) et un socle (40) présentant une plus grande dimension (S) transversale supérieure à une plus grande dimension transversale (U) du corps.

8. Dispositif selon la revendication précédente dans lequel le corps (22) comprend au moins deux pans inclinés externes orientés en direction du socle (40).

9. Réservoir (2) qui comprend un dispositif (4) selon au moins l'une quelconque des revendications précédentes.

10. Réservoir (2) de liquide pour véhicule, comprenant:
- une membrane (20) imperméable au liquide et perméable à une vapeur susceptible d'être produite par ce liquide, et
- au moins un conduit (52) apte à évacuer hors du réservoir du liquide se trouvant sur la membrane, le ou chaque conduit ayant une extrémité contiguë à la membrane, le reste du ou de chaque conduit s'étendant à une altitude inférieure à cette extrémité lorsqu'un axe principal du réservoir est vertical.

11. Réservoir selon la revendication précédente qui comprend une paroi ajourée s'étendant à distance de la membrane (20), en regard d'un côté de la membrane dirigé vers l'intérieur du réservoir.

12. Réservoir selon au moins l'une quelconque des revendications 9 à 11, dans lequel il s'agit d'un réservoir d'eau.

13. Réservoir selon au moins l'une quelconque des revendications 9 à 11, dans lequel il s'agit d'un réservoir de carburant.

14. Réservoir selon au moins l'une quelconque des revendications 9 à 11, dans lequel il s'agit d'un réservoir d'un précurseur de l'ammoniac.

15. Véhicule qui comprend un dispositif selon l'une quelconque des revendications 1 à 8 ou un réservoir selon l'une quelconque des revendications 9 à 14.

## Patentansprüche

1. Entlüftungsvorrichtung (4) für einen Tank (2) für Flüssigkeit eines Fahrzeugs, aufweisend:
- eine Membran (20), die undurchlässig ist für eine vorbestimmte Flüssigkeit und durchlässig ist für einen Dampf, der sich durch diese Flüssigkeit bilden kann, und
- wenigstens eine Rohrleitung (52), die eingerichtet ist, um Flüssigkeit, die sich auf der Membran befindet, aus der Vorrichtung abzuleiten, wobei die oder jede Rohrleitung ein Ende aufweist, das zu der Membran benachbart €ist, wobei die oder jede verbleibende Rohrleitung sich in einer Höhe erstreckt, die kleiner ist als dieses Ende, wenn eine Hauptachse der Vorrichtung vertikal ist.

2. Vorrichtung nach dem vorhergehenden Anspruch, die eingerichtet ist, um eine Gasverbindung zwischen dem Äußeren der Vorrichtung und einer oberen Seite der Membran (20) zu gestatten, wobei gleichzeitig das Eindringen, vom Äußeren der Vorrichtung her zu dieser Seite der Membran hin, jedes der Vorrichtung fremden Elements beschränkt wird, das eine kleinste Gesamtabmessung aufweist, die größer ist als ein vorbestimmter Schwellwert, insbesondere 2 mm.

3. Vorrichtung nach wenigstens einem der vorhergehenden Ansprüche, die einen Hauptkörper (22) und eine Kappe (33) aufweist, die eingerichtet ist, an dem Körper befestigt zu werden, indem sie eine Gaskommunikation zwischen dem Äußeren der Vorrichtung und einer oberen Seite der Membran gestattet, wobei gleichzeitig das Eindringen, vom Äußeren der Vorrichtung her zu dieser Seite der Membran hin, jedes der Vorrichtung fremden Elements beschränkt wird, das eine kleinste Gesamtabmessung aufweist, die größer ist als ein vorbestimmter Schwellwert, insbesondere 2 mm.

4. Vorrichtung nach einem der vorhergehenden Ansprüche, aufweisend einen Hauptkörper (22) und eine Kappe (33), die eingerichtet ist, an dem Körper (22) befestigt zu werden,
wobei die Membran (20) durch einen Umfangsrand, wasserabdichtend, an dem Körper im Bereich einer Öffnung dieses letzten befestigt ist, wobei diese Öffnung von einem inneren Kragen (24) gebildet ist,
wobei die Kappe eine Seitenwand (38) aufweist, die mit einer derartigen Innenfläche versehen ist, so dass die Innenfläche der Wand einer Außenfläche des inneren Kragens zugewandt ist, indem sie von dieser letzten durch einen Abstand getrennt ist, der kleiner ist als ein vorbestimmter Schwellwert, insbesondere 2 mm.

5. Vorrichtung nach Anspruch 3 oder 4 wobei die Kappe (33) an den Körper geschweißt ist.

6. Vorrichtung nach wenigstens einem der vorhergehenden Ansprüche, die eine durchbrochene Wand aufweist, die sich im Abstand zu der Membran (20), einer unteren Seite der Membran zugewandt, erstreckt.

7. Vorrichtung nach wenigstens einem der vorhergehenden Ansprüche, die einen Körper (22) und einen Sockel (40) aufweist, der eine größte Querabmessung (S) aufweist, die größer ist als eine größte Querabmessung (U) des Körpers.

8. Vorrichtung nach dem vorhergehenden Anspruch, wobei der Körper (22) wenigstens zwei geneigte äußere Flächen aufweist, die in Richtung des Sockels (40) weisen.

9. Tank (2), der eine Vorrichtung (4) nach wenigstens einem der vorhergehenden Ansprüche aufweist.

10. Tank (2) für Flüssigkeit eines Fahrzeugs, aufweisend:
- eine Membran (20), die undurchlässig ist für die Flüssigkeit und durchlässig ist für einen Dampf, der sich durch diese Flüssigkeit bilden kann, und
- wenigstens eine Rohrleitung (52), die eingerichtet ist, um Flüssigkeit, die sich auf der Membran befindet, aus dem Tank abzuleiten, wobei die oder jede Rohrleitung ein Ende aufweist, das zu der Membran benachbart ist, wobei die oder jede verbleibende Rohrleitung sich in einer Höhe erstreckt, die kleiner ist als dieses Ende, wenn eine Hauptachse des Tanks vertikal ist.

11. Tank nach dem vorhergehenden Anspruch, der eine mit Öffnungen versehene Wand aufweist, die sich im Abstand zu der Membran (20), einer Seite der Membran, die zu dem Inneren des Tanks hin gerichtet ist, zugewandt erstreckt.

12. Tank nach wenigstens einem der Ansprüche 9 bis 11, wobei es sich um einen Wassertank handelt.

13. Tank nach wenigstens einem der Ansprüche 9 bis 11, wobei es sich um einen Kraftstofftank handelt.

14. Tank nach wenigstens einem der Ansprüche 9 bis 11, wobei es sich um einen Tank für einen Ammoniakvorläufer handelt.

15. Fahrzeug, das eine Vorrichtung nach einem der Ansprüche 1 bis 8 oder einen Tank nach einem der Ansprüche 9 bis 14 aufweist.

## Claims

1. A ventilation device (4) for a vehicle liquid tank (2), comprising:
- a membrane (20) impermeable to a predetermined liquid and permeable to a vapor likely to be produced by this liquid, and
- at least one pipe (52) suitable for discharging liquid found on the membrane from the device, the or each pipe having an end contiguous with the membrane, the rest of the or each pipe extending at an altitude lower than this end when a main axis of the device is vertical.

2. The device according to the preceding claim, able to allow a gas communication between the outside of the device and an upper side of the membrane (20) while limiting the intrusion from the outside of the device toward this side of the membrane of any element foreign to the device having a smallest total dimension above a predetermined threshold, in particular 2 mm.

3. The device according to at least any one of the preceding claims that comprises a main body (22) and a cover (33) able to be fastened to the body while allowing a gas communication between the outside of the device and an upper side of the membrane while limiting the intrusion from the outside of the device toward this side of the membrane of any element foreign to the device having a smallest total dimension above a predetermined threshold, in particular 2 mm.

4. The device according to any one of the preceding claims, comprising a main body (22) and a cover (33) able to be fastened to the body (22),
wherein the membrane (20) is fastened by a circumferential edge, so as to be watertight, to the body at an opening of the latter, this opening being formed by an inner flange (24),
wherein the cover comprises a side wall (38) provided with an inner face such that the inner face of the wall is facing an outer face of the inner flange while being separated from the latter by a distance smaller than a predetermined threshold, in particular 2 mm.

5. The device according to claim 3 or 4, wherein the cover (33) is welded to the body.

6. The device according to at least any one of the preceding claims that comprises an open-worked wall extending at a distance from the membrane (20), facing a lower wall of the membrane.

7. The device according to at least any one of the preceding claims that comprises a body (22) and a base (40) having a largest transverse dimension (S) greater than a largest transverse dimension (U) of the body.

8. The device according to the preceding claim, wherein the body (22) comprises at least two external inclined faces oriented toward the base (40).

9. A tank (2) comprising a device (4) according to at least any one of the preceding claims.

10. A liquid tank (2) for a vehicle, comprising:
- a membrane (20) impermeable to the liquid and permeable to a vapor likely to be produced by this liquid, and
- at least one pipe (52) suitable for discharging liquid found on the membrane from the tank, the or each pipe having an end contiguous with the membrane, the rest of the or each pipe extending at an altitude lower than this end when a main axis of the tank is vertical.

11. The tank according to the preceding claim that comprises an open-worked wall extending at a distance from the membrane (20), facing a side of the membrane oriented toward the inside of the tank.

12. The tank according to at least any one of claims 9 to 11 in which it is a water tank.

13. The tank according to at least any one of claims 9 to 11 in which it is a fuel tank.

14. The tank according to at least any one of claims 9 to 11 in which it is an ammonia precursor tank.

15. A vehicle that comprises a device according to any one of claims 1 to 8 or a tank according to any one of claims 9 to 14.
